Europäisches Patentamt

European Patent Office

Office européen des brevets

(19)

(11) Publication number: **0 414 924 A1**

## EUROPEAN PATENT APPLICATION
### published in accordance with Art. 158(3) EPC

(21) Application number: **90911921.6**

(22) Date of filing: **28.02.89**

(86) International application number:
**PCT/SU89/00057**

(87) International publication number:
**WO 90/10190 (07.09.90 90/21)**

(51) Int. Cl.5: **G01B 7/20**

(43) Date of publication of application:
**06.03.91 Bulletin 91/10**

(84) Designated Contracting States:
**CH DE FR GB IT LI SE**

(71) Applicant: **INSTITUT ELEKTROSVARKI IMENI E.O.PATONA AKADEMII NAUK UKRAINSKOI SSR**
**ul. Bozhenko, 11**
**Kiev, 252650(SU)**

Applicant: **MOSKOVSKOE NAUCHNO-PROIZVODSTVENNOE OBIEDINENIE "IZMERITEL"**
**Kholodilny per, 1**
**Moscow, 113191(SU)**

Applicant: **KIEVSKOE PROIZVODSTVENNOE OBIEDINENIE "VEDA"**
**ul. Smolenskaya, 31-33**
**Kiev, 252680(SU)**

(72) Inventor: **GORDEEVA, Faina Alexandrovna**
**ul. B.Akademicheskaya, 79-2-46**
**Moscow, 125183(SU)**
Inventor: **ALEXEEV, Alexandr Ivanovich**
**Kashirskoe shosse, 4-1-163**
**Moscow, 115230(SU)**
Inventor: **TSYKUNOV, Nikolai Valentinovich**

**ul. Sportivnaya, 13-66**
**Moskovskaya obl. Lytkarino, 140061(SU)**
Inventor: **KHRAKOVSKY, Alexandr Iosifovich**
**Kovalsky per, 12**
**Kiev, 252164(SU)**
Inventor: **KUZNETSOVA, Lidia Stepanovna**
**kvartal I, 17-19, Moskovskaya obl.**
**Lytkarino, 140061(SU)**
Inventor: **SYROV, Alexandr Viktorovich**
**ul. Zhukovskogo, 1-18, Moskovskaya obl.**
**Zhukovsky, 140160(SU)**
Inventor: **BEBISHEV, Anatoly Kuzmich**
**pr. Leninskogo komsomola, 4-97,**
**Moskovskaya obl.**
**Vidnoe, 142700(SU)**
Inventor: **LEBEDEV, Vladimir Kirillovich**
**ul. Raisy Okipnoi, 5b-24**
**Kiev, 252167(SU)**
Inventor: **FEDKO, Boris Anantolievich**
**ul. Mikitenko, 5a-86**
**Kiev, 252139(SU)**
Inventor: **BAZZHIN,Jury Mikhailovich**
**deceased**
**deceased(SU)**

(74) Representative: **Godwin, Edgar James et al**
**MARKS & CLERK 57-60 Lincoln's Inn Fields**
**London, WC2A 3LS(GB)**

(54) **DEVICE FOR DETERMINING THE PARAMETERS OF DEVELOPING SURFACE CRACKS.**

(57) A device for measuring the parameters of developing surface cracks comprises a sensitive element (1) applied to a dielectric sublayer (2) at the point of expected development of a surface crack (11) and comprised of a number of conductors (4', 4''....4ⁿ), and further comprises a measuring circuit (3) electrically connected to the sensitive element (1) in which the ends of the conductors ($4^I$, $4^{II}$,...$4^n$) are electrically interconnected in series by their main bridges ($5^I$, $5^{II}$, ...$5^{n-1}$), the sensitive element being also provided with additional bridges ($6^I$, $6^{II}$, ...$6^{n-1}$) each of which is located opposite a main bridge ($5^I$, $5^{II}$, ...$5^{n-1}$).

FIG. 1

# A DEVICE FOR DETERMINING PROPAGATION PARAMETERS OF SURFACE CRACKS

## Technical Field

The present invention relates to measurements and in particular to devices for determining propagation parameters of surface cracks.

The invention can be advantageously used when in testing or operating structures it is necessary to determine automatically propagation parameters of surface cracks and to obtain information suitable for subsequent processing. This may be needed, for example, in analyzing crack resistance characteristics of new structural materials for critical machine assemblies and elements and corresponding structures such as wings and fuselage of airplanes, rocket airframes, gas pipes, hulls, pressure vessels used to store gaseous and liquid substances and the like, more specifically, when there is the need to measure automatically to a high accuracy the length or propagation path of surface cracks and to obtain electrical signals proportional to these parameters for subsequent processing.

## Background Art

Known in the art are several types of devices for determining parameters of surface cracks, which use optics, ultrasonic vibrations and electric current, as well as special transducers glued on a corresponding structure and failing simultaneously wherewith during tests.

For example, there are known devices for measuring parameters of surface cracks by the use of television facilities (cf. GB, A, 2057124), in which prior to tests a test specimen is given a coat of special varnish in the area where the propagation of surface cracks is likely, the test specimen being subsequently gripped by a testing machine. The surface of the test specimen on which a crack is expected to propagate will be projected by the use of a microscope into a television camera. Then the picture of the surface crack is converted by a special unit into an electrical signal made up of a pulse sequence proportional to the length of the given surface crack at each instant. The foregoing devices comprise mechanical adjustment assemblies controlling the movements of optical units connected with the television camera, and also electronic converters and pulse counters.

The utilization of such devices involves considerable difficulties encountered in preparing test specimens and aligning the equipment. Furthermore, costly special facilities are required in their operation, which is generally a limiting factor.

There is also known a device for determining parameters of surface cracks (cf. DE, A, 2745244), in which a sensitive element formed with a strip of current-conducting material is attached to a test specimen through an insulating layer. In testing, the sensitive element fails simultaneously with the test specimen at the point where a surface crack propagates. In the course of its propagation there occurs a change in the electric resistance of the sensitive element, which is measured in a suitable manner. The sensitive element has a measuring section which embraces the surface crack propagation area and is shaped so that its resistance increases in proportion to the size of the given surface crack in an essentially linear manner. The measuring section should be made symmetric about the expected direction of propagation of the surface crack. Current is supplied to the sensitive element so that it passes via the measuring section around the surface crack. Parameters of the surface crack are determined by measuring voltage between the test electrodes of the sensitive element. To increase output voltage linearity dependent on the length of the surface crack, d.c. supply voltage is adjusted according to the voltage across the additional electrodes.

The disclosed device necessitates the use of special facilities and its linear measurements range amounts to about 70% of the area of the measuring section of the sensitive element in the event of rectilinear propagation of surface cracks. Moreover, in such devices considerable difficulties are encountered in observing visually the propagation of a crack on the surface of a test specimen, which may be necessary in certain instances.

The simplest and closest prior art device comprises a sensitive element made up of a number of parallel resistive strips joined together on ends and connected to a measuring circuit, said sensitive element being used to obtain an electrical signal proportional to the propagation of a given surface crack (cf. US, A, 2986928). Such sensitive elements are glued on the surface of a test specimen in the area wherein the emergence and propagation of a surface crack are likely. As a particular surface crack emerges and propagates, the resistive strips are successively broken due to which the total resistance of the sensitive element is changed. The amount by which the electric resistance has varied is measured to determine the parameters of the given surface crack.

However, the last-mentioned device is characterized by low accuracy in determining parameters of surface cracks due to small changes in the electric resistance of the sensitive elements, non-linearity and low reliability in the case of long surface cracks because of early failure of the resistive strips.

Disclosure of the Invention

The object of the present invention is to create a device for determining propagation parameters of surface cracks, in which a new embodiment of a sensitive element and its electric characteristics would substantially enhance accuracy and increase the range of measurement of parameters of propagating surface cracks.

There is provided a device for determining propagation parameters of surface cracks, comprising a sensitive element applied to a dielectric base and secured at a point where the propagation of a surface crack is most likely, the sensitive element being made up of conductors, and also a measuring circuit electrically connected to the sensitive element, in which, according to the invention, leads of the conductors of the sensitive element are electrically interconnected in series by means of main jumpers, the sensitive element being also provided with additional jumpers, each of which is connected directly opposite the corresponding main jumper.

The device according to the invention provides for precision measurements of propagation parameters of surface cracks and enhances their reliability.

It is advantageous that the conductors of the sensitive element should be equally spaced.

This makes the parameters of an output electrical signal directly proportional to the length of a surface crack for subsequent recording.

It is also advantageous that said conductors should be relatively disposed at a distance changing in a monotonic manner.

Using the configuration of the sensitive element it is, thus, possible to make an output electrical signal vary in a predetermined fashion relative to the length of a surface crack, a feature substantially simplifying its subsequent processing and enhancing accuracy in measuring the actual length of a given surface crack.

It is further advantageous that the width of said conductors should be varied in a monotonic manner.

This permits increasing reliability of the sensitive element.

It is preferable that the ratio of the conductor width to the distance between the conductors should be a constant quantity.

This allows increasing the reliability of the sensitive element and the entire device with surface cracks of different lengths.

It is also preferable that the ratio of the conductor width to the distance between the conductors should be monotonically changed.

Such a feature ensures optimal mechanical characteristics of the conductors of the sensitive element with surface cracks of different lengths.

It is further preferable that the length of the conductors should be monotonically changed in the direction of propagation of a surface crack.

This will make it less probable that a surface crack goes beyond the limits of the sensitive element in the course of its propagation.

It is desirable in certain instances that even conductors should be turned through a predetermined angle relative to odd conductors.

As a result, the coordinated of the top of a surface crack may be determined in a reference system related to the sensitive element.

It is also desirable that the difference between the electric resistance of the main jumpers and the opposite additional jumpers should be a constant quantity.

The measuring accuracy will, thus, be appreciably increased.

It is of advantage that the difference between the electric resistances of the main jumpers and the opposite additional jumpers should be monotonically changed.

This makes it possible to change in a desired fashion an output electrical signal depending on the length of a surface crack.

It is further desirable that the last conductor in the direction of propagation of a surface crack should represent a voltage divider having larger and smaller arms.

This feature increases the measuring accuracy with said voltage divider inserted in the measuring circuit.

It is advisable that a series resistor should be connected to the first conductor in the direction of propagation of a surface crack, said series resistor being connected on the side of the smaller arm of the divider with an even total number of conductors and on the side of the larger arm of the divider with an odd total number of conductors.

Such an arrangement provides for a more accurate equilibrium of an electrical bridge used as a measuring circuit.

It is also advisable that the additional jumpers located on one side of the sensitive element should be used to interconnect the leads of even conductors, while the additional jumpers located on the other side of the sensitive element are used to interconnect the leads of odd conductors.

As a result, the level of an electrical signal is substantially increased.


Brief Description of the Drawings

The invention will now be described further with reference to specific embodiments thereof, taken in conjunction with the accompanying drawings wherein:

FIG. 1 shows diagrammatically one of the preferred embodiments of a device for determining propagation parameters of surface cracks with a sensitive secured to a test specimen and a connected measuring circuit according to the invention;

FIG. 2 depicts one of the preferred embodiments of the sensitive element and its connection to an electrical bridge used as a measuring circuit according to the invention;

FIG. 3 shows diagrammaticallt an output electrical signal of the device with the sensitive element connected to the electrical bridge according to the invention;

Fig. 4 shows another preferred embodiment of the sensitive element with conductors whose length monotonically increases in the direction of propagation of a surface crack according to the invention;

FIG. 5 shows still another preferred embodiment of the sensitive element for determining the coordinate of the propagating surface crack according to the invention;

FIG. 6 illustrates variation of the parameters of an output electrical signal of the device in determining the coordinates of the propagating surface crack according to the invention;

FIG. 7 illustrates variation of the parameters of an output electrical signal of the device with an increase in the difference between the electric resistance of the main and additional jumpers of the sensitive element according to the invention;

FIG. 8 shows diagrammatically one of the preferred connections of a series resistor with an odd total number of conductors in the sensitive element according to the invention;

FIG. 9 shows diagrammatically one of the preferred connections of the main and additional jumpers and the series resistor with an even total number of conductors in the sensitive element according to the invention; and

FIG. 10 shows diagrammatically one of the preferred connections of the main and additional jumpers and the series resistor with an odd total number of conductors in the sensitive element according to the invention.


Best Mode of Carrying out the Invention

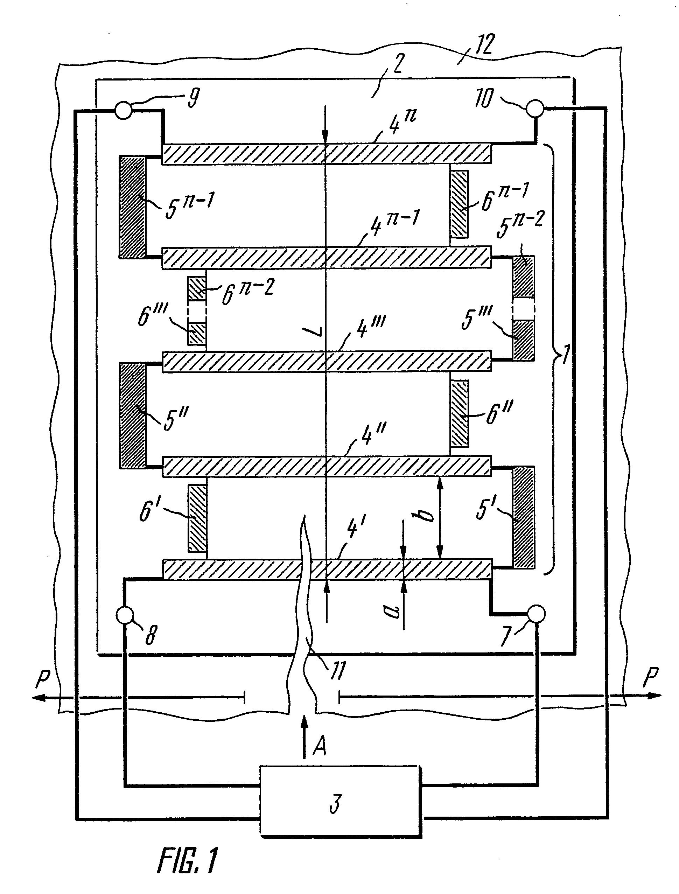

The proposed device for determining propagation parameters of surface cracks (FIG. 1) comprises a sensitive element 1 applied to a dielectric base 2 and a measuring circuit electrically connected to the sensitive element 1. The sensitive element 1 is made up of a number of conductors 4 interconnected in succession by means of main jumpers 5 and additional jumpers 6. The sensitive element 1 has electrical contacts 7, 8, 9 and 10 by means of which it is connected to the measuring circuit 3. To determine the parameters of a surface crack 11 , the sensitive element 1 is attached through the dielectric base 2 to a laboratory sample 12 or directly to the operating structure wherein the surface crack 11 is propagated under the action of load P along arrow A. The sensitive element 1 is secured so that the surface crack 11 passes at right angles to the conductors 4 between the main jumpers 5 and the corresponding additional jumpers 6.

The dimensions and forms of the conductors 4 may be chosen arbitrarily, say as straight lines, circles or parts thereof, broken lines, ovals, lines of variable width and the like.

The components of the sensitive element 1, more particularly, the conductors 4, the main jumpers 5 and the additional jumpers 6, and also other necessary elements may be manufactured by any known method.

The sensitive element 1 is secured by any prior art techniques, for example, by means of an intermediate adhesive layer on the surface of a test specimen 12 using the technology recommended for a given type of glue. Thereafter said sensitive element is connected to the measuring circuit 3.

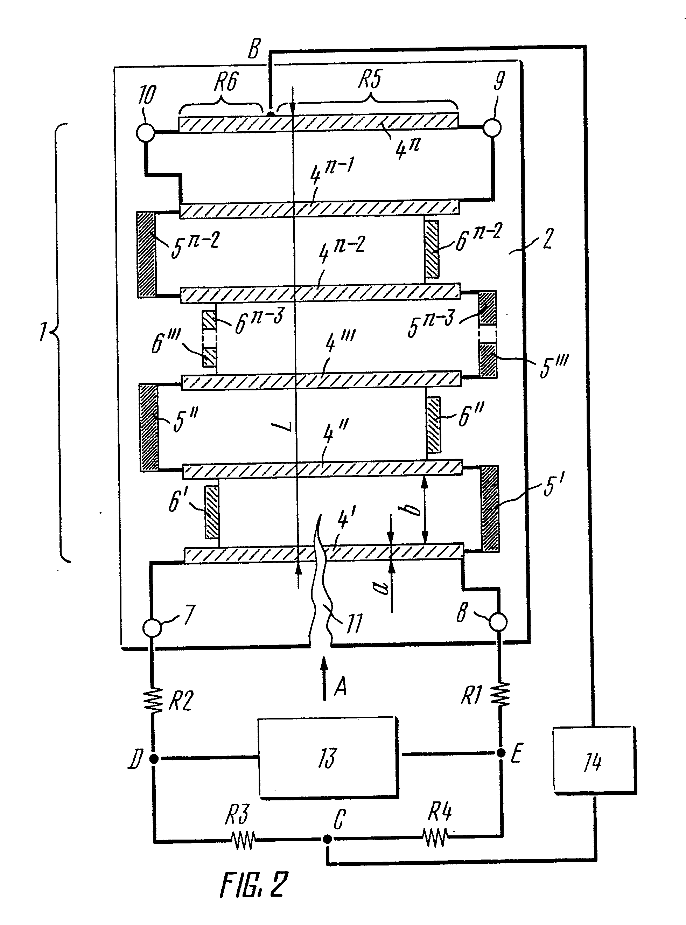

The measuring circuit 3 may be based on any known method of measuring electric resistance and its increment. To enable better understanding of the invention, the measuring circuit 3 will subsequently be described as an electrical bridge (FIG. 2) whose arms are formed by resistors $R_1$, $R_2$, $R_3$ and $R_4$, respectively.

FIG. 2 shows connection of the sensitive element 1 to the bridge circuit incorporating the resistors $R_1$, $R_2$, $R_3$, $R_4$, a power supply 13 and a recorder 14. The sensitive element 1 is connected via its contacts 7 and 8 to the adjacent bridge arms made up of the resistors $R_1$ and $R_2$. The output electrical signal of the device is produced between points B and C of one diagonally opposite pair of junctions of the bridge and measured by the recorder 14. The power supply 13 is connected to the other diagonally opposite pair of junctions of the bridge between points D and E.

The device forming the subject of the present invention operates as follows.

As the surface crack 11 propagates along arrow A, the first conductor 4' fails and the main jumper 5' having electric resistance $r_1$ is connected across the respective bridge to the resistor $R_1$, while the additional jumper 6' having electric resistance $r_2$ is connected across the other bridge arm to the resistor $R_2$.

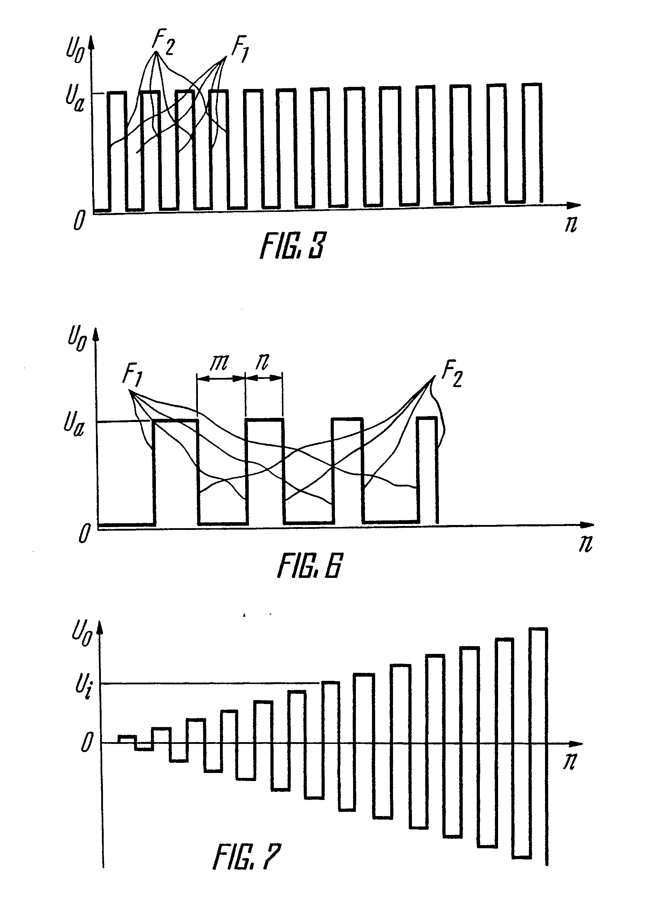

Since the electric resistance $r_1$ is not equal to the electric resistance $r_2$, the balance of the electrical bridge is upset. The amplitude $U_a$ (FIG. 3) of the output electrical signal $U_o$ increases with the difference between the electric resistance $r_1$ and $r_2$. Further propagation of the surface crack causes the second conductor 4" (Fig. 2) to fail. The main jumper 5" having electric resistance $r_1$ is connected across the respective bridge arm to the resistor $R_2$, while the additional jumper 6 having electric resistance $r_2$ is connected across the other bridge arm to the resistor $R_1$. The electrical bridge is balanced and the output electrical signal $U_o$ of the device abruptly changes in the opposite direction (FIG. 3). When the surface crack propagates still further, the subsequent conductors 4 of the sensitive element 1 fail in succession, which causes an abrupt change in the amplitude $U_a$ of the output electrical signal $U_o$.

Thus, the output electrical signal $U_o$ of the device (FIG. 3) represents a sequence of square electrical pulses having the following characteristics: number of leading edges $F_1$, number of $F_2$, total number of edges - $k = F_1 - F_2$ when the signal amplitude is $U_a$.

The afore-mentioned characteristics are indicative of such parameters of a surface crack as the accurrence time, the length and the propagation rate.

The measuring circuit 3 may represent a circuit for measuring electric potantials (not shown in the drawing) across the contacts 7, 8, 9 and 10 of the sensitive element 1, which is described in detail in Application DE, A, 3513005.

The measuring circuit 3 of the device may also be used for directly measuring a change in the electric resistance of the sensitive element 1 across the contacts 7-8, 7-10, etc. Such a measurement involves the use of an ohmmeter and is made when the conductors 4 fail in the course of propagation of the surface crack 11 (not shown in the drawing).

When the measuring circuit represents an electrical bridge (FIG. 2), the current value of the length $l_i$ of the surface crack 11 may be determined from the following equation:

$$l_i = (k - 1)(a - b) - l_o \qquad (1)$$

where k is the total number of leading edges $F_1$ and
trailing edges $F_2$ of the output electrical
signal $U_o$(FIG. 3), which is depend on the
number of the conductors 4 that failed due
to the surface crack 11;
a is a preset width of the conductors 4;
b is a predetermined distance between adjacent conductors; and
$l_o$ is the initial length of the surface crack 11 before failure of the first conductor 4.

To determine the length $l_i$ of the propagating surface crack 11 by the use of the proposed device, it is, therefore, necessary to compute the total number of the leading edges $F_1$ and the trailing edges $F_2$ of the output electrical signal $U_o$ (FIG. 3) from the moment the sensitive element 1 has been fixed where the propagation of the surface crack 11 is likely with the sensitive element 1 inserted in the bridge circuit (FIG.

2).

The total distance (a - b) between the conductors 4 is chosen to be a constant quantity so that the length $l_i$ of the propagating surface crack 11 is directly proportional (FIG. 2) to the value k in equation (1) in compliance with the invention. At a preliminary stage, the conductors 4 may be equally spaced to a high accuracy, a feature making accurate the measurement of the length $l_i$ of the surface crack 11. It is common knowledge that due to physical reasons the advancement rate of the surface crack 11 increases in many cases with its propagation. At the initial stage of propagation of the surface crack (at equal distance (a - b) between the conductors 4), the time between failures of the first conductor 4' and the subsequent conductor 4" will be appreciably greater that the time between failures of the conductor $4^{n-1}$ next to the last and the last conductor $4^n$. A relative error in determining the parameters of the surface crack 11 with small lengths $l_i$ may reach an unacceptable value. Thus, when the propagation of the surface crack 11 is known in advance to be quick or slow, the conductors 4 according to the invention are set at a monotonically changing distance (a - b) over the length L of the sensitive element 1 (bringing about an increase or a decrease). Stated differently, the distance (a - b) = f (L).

In many practical problems relating to the study of propagation of surface cracks when testing modern structural materials for crack resistance, a plastic zone is formed ahead of the top of the propagating surface crack 11. Deformation in such a zone may reach a value causing failure of the conductors 4 of the sensitive element 1 although there is no surface crack 11 under it. The plastic zone normally increases with the length $l_i$ of the surface crack 11. To decrease the probability of premature failure of the conductors 4 of the sensitive element 1, that is, to enhance reliability of the sensitive element 1 with plastic deformation of the material at the top of the surface crack 11, according to the invention, the width a of the conductors 4 is changed over the length L of the sensitive element 1. This can be done at a constant distance (a + b) between the conductors 4 and also when the distance (a + b) between the conductors 4 is changed over the length L of the sensitive element 1 due to the value b.

From the aforesaid it follows that there may be other relationships between the width a of the conductors 4 and the distance b between the edges of the conductors 4. In accordance with the invention, it is possible to make constant the ratio of the width a of each conductor 4 to the distance b up to the edge of the next conductor 4 or to change monotonically the ratio of the width a of the conductor 4 to the distance b up to the edge of the next conductor 4.

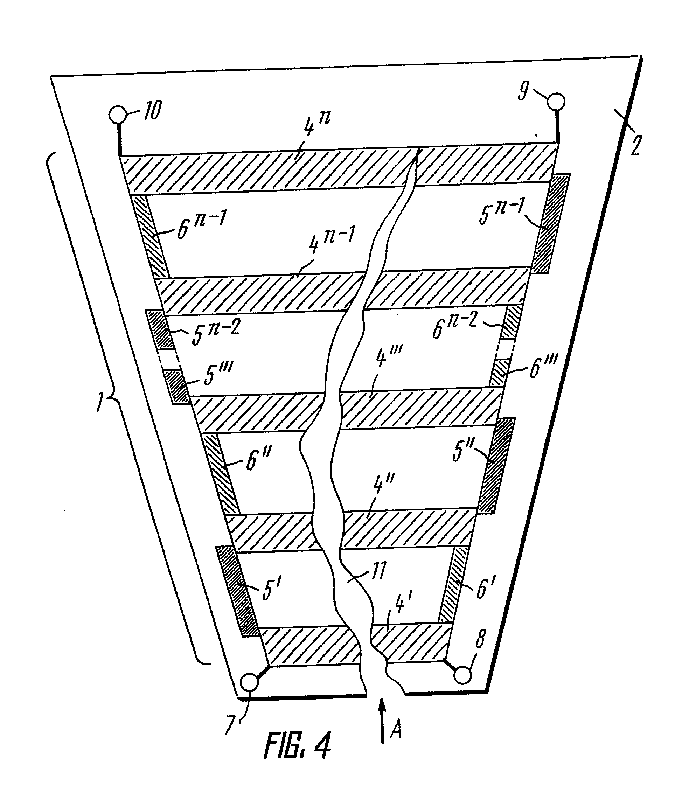

When the propagation of the surface crack 11 is analyzed in actual structures, the propagation path of the surface crack is frequently not a straight line. The deviation may increase in the course of propagation of the surface crack. It is essential that the surface crack 11 should not go beyond the limits of the sensitive element 1. To prevent this, the length of the conductors 4 (FIG. 4) in the proposed device is monotonically increased.

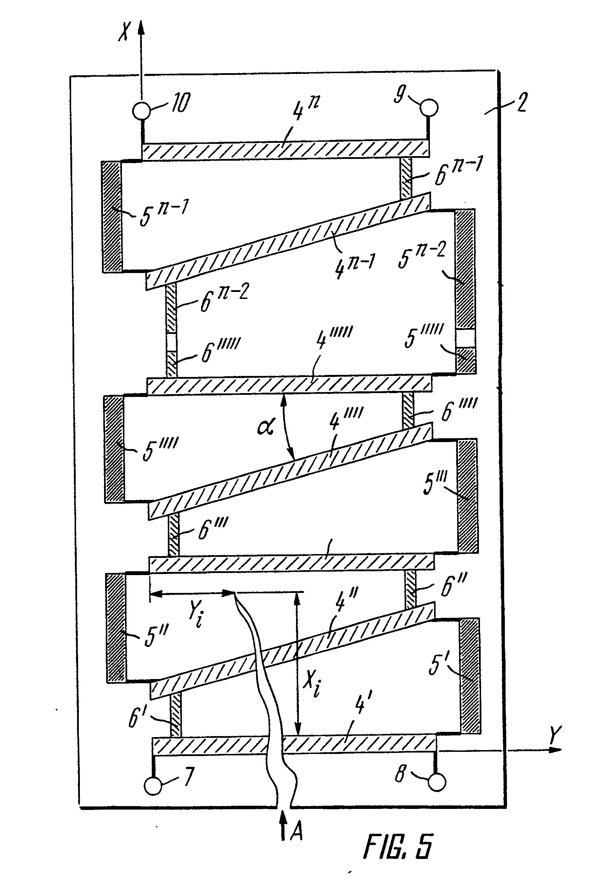

Furthermore, it is often necessary to keep watch on the propagation path of the surface crack. If the propagation of the surface crack 11 (FIG. 5) is not along a straight path, one should consider deviation $Y_i$ from rectilinear propagation of the surface crack 11 in addition to projection X of the length $l_i$ of the surface crack 11 onto the line denoted with arrow A.

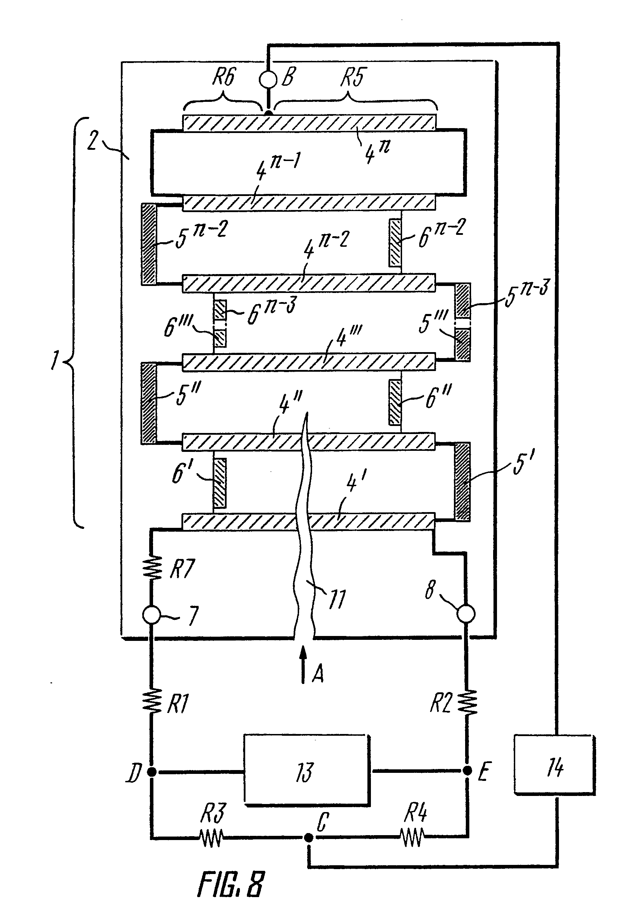

To determine the above two parameters in the system of coordinates X; Y of the sensitive element 1, according to the invention, even and odd conductors 4 are turned through an angle $\alpha$ with respect to each other. Considering that the rate of propagation of the surface crack 11 in the gap between adjacent even ($4^{II}$, $4^{IV}$ ...) or adjacent odd ($4^I$, $4^{III}$ ...) conductors 4 does essentially change, the parameters of the surface crack may be determined from the following relationships (FIG. 6):

$$X_i = (k - 1)(a + b) + l_o$$

$$Y = \frac{X}{1 + m/n}$$

where a = width of the conductor 4;
b = distance between adjacent conductors 4;
k = total number of leading edges $F_1$ and trailing edges $F_2$ of the output electrical signal $U_o$;
m = time of propagation of the surface crack 11 from the odd ($4^I$) to even ($4^{II}$) conductor 4;
n = time of propagation of the surface crack 11 from the even ($4^{II}$) to odd ($4^{III}$) conductor 4; and
$l_o$ = initial length of the surface crack 11 up to the first conductor 4 of the sensitive element 1.

The amplitude $U_a$ of the output electrical signal $U_o$ is directly proportional to the length $l_i$ of the surface crack 11 in measuring circuits (except for an electrical bridge) when, according to the invention, the

difference between resistances ($r_1 - r_2$) of the main jumpers 5 and the additional jumpers 6 is a constant quantity. When the sensitive element is inserted in an electrical bridge, the resistance difference ($r_1 - r_2$) of the main jumpers 5 and the additional jumpers 6 defines the amplitude $U_a$ of the output electrical signal $U_o$ (FIG. 3), that is, the bridge unbalance. Increasing or decreasing said difference permits changing the sensitivity of the proposed device.

When determining parameters of several propagating surface cracks 11 in the scan mode, use can be made of one electrical bridge which should be successively connected to the first and second sensitive elements 1.

In accordance with the invention, this can be done by monotonically changing the electric resistance $r_1$ of the main jumpers 5 and the electric resistance $r_2$ of the opposite additional jumpers 6. It is also possible to change monotonically the resistance difference ($r_1 - r_2$) of the additional jumpers 6. FIG. 7 illustrates a variation of the output electrical signal $U_i$ of the proposed device.

In this case the measurement of the length $l_i$ of the surface crack 11 does not involve determination of the total number k of the leading edges $F_1$ and the trailing edges $F_2$ of the output electrical signal $U_o$ for it is sufficient to measure the amplitude $U_a$ of the output electrical signal $U_o$ and use it for finding the length $l_i$ of the surface crack 11 as follows:

$$l_i = \left| U_i \right| s$$

$$\text{where} \quad \left| U_i \right| = \text{absolute value of the amplitude of the output electrical signal; and}$$

$$s = \text{scale factor.}$$

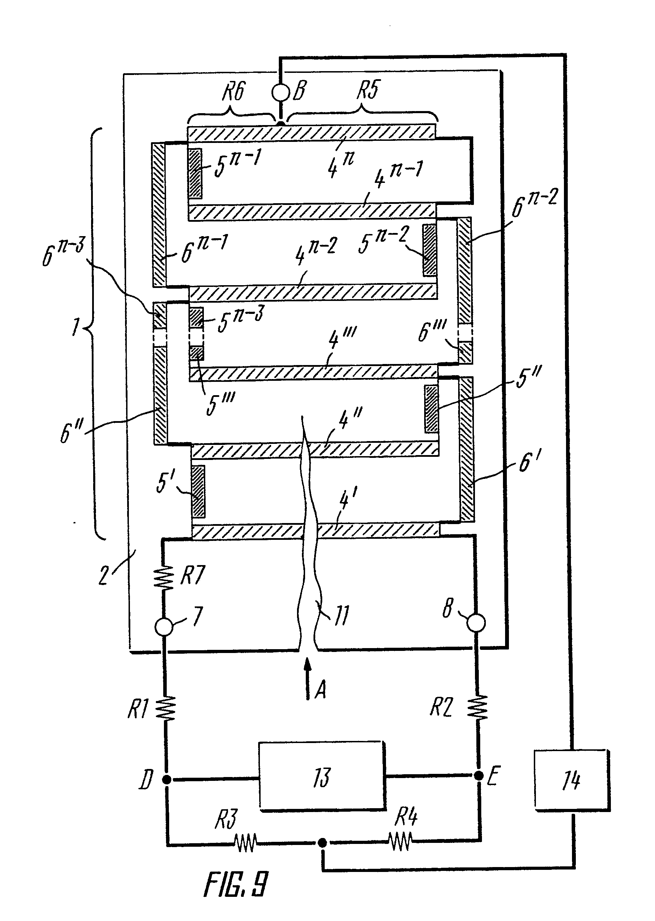

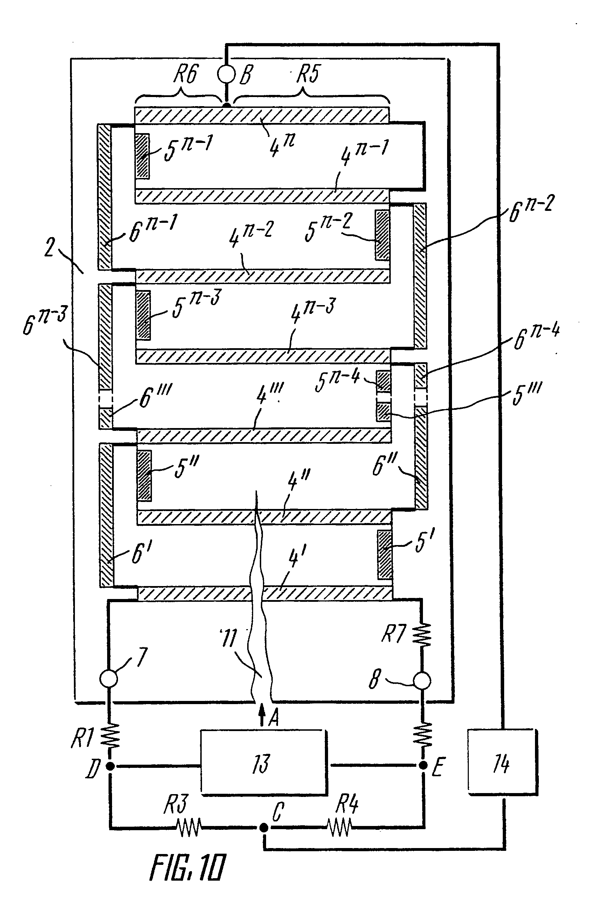

The use of an electrical bridge as a measuring circuit imposes certain conditions on the electrical resistances $r_1$ and $r_2$ produced in the course of propagation of the surface crack 11 by connecting the main jumpers 5 and the additional jumpers 6 to the resistors $R_1$ and $R_2$ (FIG. 2). The linearity of the measuring circuit should mot be upset while the surface crack 11 propagates. To prevent this, the last conductor $4^{ll}$ represents a voltage divider having a larger arm $R_5$ and a smaller arm $R_6$. An additional method of providing for linearity of the output signal $U_o$ with the measuring circuit 3 comprising an electrical bridge consists in that, according to the inventions, a series resistor $R_7$ (FIG. 8) is connected to the first conductor $4^l$ on the side of the smaller arm $R_6$ of the divider when the total number of the conductors 4 is even and a series resistor $R_7$ (FIG. 10) is inserted on the side of the larger arm $R_5$ of the divider when the total number of the conductors 4 is odd.

The sensitivity of the proposed device is also increased by that in the sensitive element 1 the additional jumpers 6 located on one side thereof interconnect the leads of the even conductors $4^{ll}$, $4^{IV}$, while those located on the other side of the sensitive element 1 interconnect the leads of the odd conductors $4^l$, $4^{lll}$. This permits increasing the electric resistance $r_2$ of the additional jumpers 6 both when the number of said conductors is even (FIG. 9) and odd (FIG. 10) as compared with the electric resistance $r_1$ of the main jumpers 5 (FIG. 1). At the same time, the electric resistance $r_1$ of the main jumpers 5 (FIGS 9, 10) is equal to the electric resistance $r_2$ of the additional jumper 6 (FIG. 1). Inasmuch as the difference between the electric resistance ($r_2 - r_1$) of the additional jumper 6 and the main jumper 5 (FIGS 9, 10) is increased as compared with the difference between the electric resistances ($r_1 - r_2$) of the main jumper 5 and the additional jumper 6 (FIG. 1), the amplitude $U_a$ of the output electrical signal $U_o$ (FIG. 3) will be greater in the given case. Thus, the sensitivity of the entire device is substantially increased.

Industrial Applicability

The present invention can be used to best advantage in testing special specimens and structural elements under laboratory and field conditions. The effect of individual factors and their combined influence on the propagation of surface cracks are studied in laboratory tests. The use of the device according to the invention makes it possible to determine the parameters of surface cracks in operation of the most critical structures exposed to the influence of the most pronounced factors affecting the propagation of surface cracks such, for example, as loading parameters, a corrosive medium, temperature and the like.

When laboratory specimens and structural elements are tested for crack resistance, the main problem is to record the parameters of propagating cracks depending on loading conditions. Direct observation of propagating surface cracks is extremely difficult and often impermissible from safety considerations because failure of structural elements may be sudden. Therefore, the urgent present-day problem is to automate measurements of propagation parameters of surface cracks during tests at a reasonable cost of facilities used and a desired accuracy.

**Claims**

1. A device for determining propagation parameters of surface cracks, comprising a sensitive element (1) applied to a dielectric base (2) where the propagation of a surface crack (11) is most likely and made up of a number of conductors ($4^I$, $4^{II}$, ... $4^n$), and also a measuring circuit (3) electrically connected to the sensitive element (1), **characterized** in that in the sensitive element (1) leads of the conductors ($4^I$, $4^{II}$, ... $4^n$) are electrically interconnected in series by means of main jumpers ($5^I$, $5^{II}$, ... $5^{n-1}$), the sensitive element being also provided with additional jumpers ($6^I$, $6^{II}$, ... $6^{n-1}$), each of which is connected directly opposite the corresponding main jumper ($5^I$, $5^{II}$, ..., $5^{n-1}$).

2. A device as claimed in Claim 1, **characterized** in that the distance between the conductors ($4^I$, $4^{II}$, ... $4^n$) is a constant quantity.

3. A device as claimed in Claim 1, **characterized** in that the distance between the conductors ($4^I$, $4^{II}$, ..., $4^n$) is a monotonically changing quantity.

4. A device as claimed in Claim 1, **characterized** in that the width of the conductors ($4^I$, $4^{II}$, ..., $4^n$) is a monotonically changing quantity.

5. A device as claimed in Claims 1, 2 and 3, **characterized** in that the ratio of the width of the conductors ($4^I$, $4^{II}$, ..., $4^n$) to the distance therebetween is a constant quantity.

6. A device as claimed in Claims 1, 2 and 3, **characterized** in that the ratio of the width of the conductors ($4^I$, $4^{II}$, ... $4^n$) is a monotonically changing quantity.

7. A device as claimed in Claim 1, **characterized** in that the length of the conductors ($4^I$, $4^{II}$, ..., $4^n$) is a monotonically changing quantity.

8. A device as claimed in Claim 1, **charac**terized in that the even conductors ($4^{II}$, $4^{IV}$...) are turned through a predetermined angle with respect to the odd conductors ($4^I$, $4^{III}$ ...).

9. A device as claimed in any claim from 1 to 8, **characterized** in that the difference between electric resistance of the main jumpers ($5^I$, $5^{II}$) and the opposite additional jumpers ($6^I$, $6^{II}$) is a constant quantity.

10. A device as claimed in any claim from 1 to 8, **characterized** in that the difference between electric resistances of the main jumpers ($5^I$, $5^{II}$, ..., $5^{n-1}$) and the opposite additional jumpers ($6^I$, $6^{II}$, ..., $6^{n-1}$) is a monotonically changing quantity.

11. A device as claimed in Claim 9, **characterized** in that the conductor ($4^n$) being the last in the direction of propagation of the surface crack (11) represents a voltage divider having a larger arm ($R_5$) and a smaller arm ($R_6$).

12. A device as claimed in Claim 11, **characterized** in that a series resistor ($R_7$) is connected to the first conductor ($4^I$) on the side of the smaller arm ($R_6$) of the voltage divider when the total number of the conductors ($4^I$, $4^{II}$, ..., $4^n$) is even.

13. A device as claimed in Claim 11, **characterized** in that the series resistor ($R_7$) is connected to the first conductor ($4^I$) on the side of the larger arm ($R_5$) of the woltage divider when the total number of the conductors ($4^I$, $4^{II}$, ... $4^n$) is odd.

14. A device as claimed in Claims 11 through 13, **characterized** in that the additional jumpers ($6^I$, $6^{II}$, ...,

$6^{n-1}$) located on one side of the sensitive element (1) interconnect the leads of the even conductors ($4^{II}$, $4^{IV}$) and those disposed on the other side of the sensitive element (1) interconnected the leads of the odd conductors ($4^{I}$, $4^{III}$).

FIG. 1

FIG. 2

FIG. 3

FIG. 6

FIG. 7

FIG. 4

FIG. 5

FIG. 8

**FIG. 9**

FIG. 10

# INTERNATIONAL SEARCH REPORT

International Application No PCT/SU89/00057

## I. CLASSIFICATION OF SUBJECT MATTER (If several classification symbols apply, indicate all) 6

According to International Patent Classification (IPC) or to both National Classification and IPC

Int.Cl.$^5$  G 01 B 7/20

## II. FIELDS SEARCHED

### Minimum Documentation Searched 7

| Classification System | Classification Symbols |
|---|---|
| Int.Cl.$^5$ | G 01 B 7/18, 7/20, 7/22, |
| US cl. | 338/2 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with Indication, where appropriate, of the relevant passages 12 | Relevant to Claim No. 13 |
|---|---|---|
| A | SU, A1, 1388704 (Institut elektrosvarki im E.O.Patona) 15 April 1988 (15.04.88), see the abstract | 1-2,5-6, 12 |
| A | SU, A1, 1456771 (A.Ya.Poichenko) 7 February 1989 (07.02.89), see the abstract, figure 1 | 1,2,5 |
| A | US, A, 3786679 (Battelle Memorial Institute), 22 January 1974 (22.01.74), figure 1, column 2, lines 51-61, claim 1 | 8 |
| A | US, A, 4086554 (Daimler-Benz Aktiengesellschaft) 25 April 1978, figures 1-3, column 2, lines 36-68 | 8 |
| A | US, A, 4331035 (Gould Inc), 25 May 1982 (25.05.82) figures 1,2, column 3, lines 19-26; column 4, lines 3-18 & GB, 2063560 JP, 56076001 | 6-8 |
| | ---------------- | |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 28 September 1989 (28.09.89) | 17 November 1989 (17.11.89) |
| International Searching Authority | Signature of Authorized Officer |
| ISA/SU | |

Form PCT/ISA/210 (second sheet) (January 1985)